## Europäisches Patentamt

(19) **European Patent Office**

**Office européen des brevets**

(11) Numéro de publication: **0 142 401**
**B1**

---

(12) **FASCICULE DE BREVET EUROPEEN**

---

(45) Date de publication du fascicule du brevet:
**17.11.88**

(21) Numéro de dépôt: **84401926.5**

(22) Date de dépôt: **26.09.84**

(51) Int. Cl.⁴: **G 01 F 15/06**

---

(54) **Dispositif permettant de transmettre à distance une information de type numérique et application notamment aux compteurs répétiteurs.**

---

(30) Priorité: **28.09.83 FR 8315397**

(43) Date de publication de la demande:
**22.05.85 Bulletin 85/21**

(45) Mention de la délivrance du brevet:
**17.11.88 Bulletin 88/46**

(84) Etats contractants désignés:
**AT BE CH DE GB IT LI LU NL SE**

(56) Documents cités:
**US - A - 3 039 311**
**US - A - 3 555 902**
**US - A - 3 731 533**
**US - A - 4 032 805**

**Le dossier contient des informations techniques présentées postérieurement au dépôt de la demande et ne figurant pas dans le présent fascicule.**

(73) Titulaire: **GAZ DE FRANCE, 23, rue Philibert Delorme, F-75017 Paris (FR)**
Titulaire: **SAGIMECA, Société dite, 18, impasse des Chauffernes, F-77400 Lagny sur Marne (FR)**

(72) Inventeur: **Waroux, Maurice Denis, 15, rue Roger Renard, F-95270 Saint Martin Du Tertre (FR)**
Inventeur: **Patusset, Jacques, 14, rue de Gérardmer, F-77400 Lagny (FR)**
Inventeur: **Bougras, Pierre, 18, impasse des Chauffernes, F-77400 Lagny (FR)**

(74) Mandataire: **Lerner, François, 5, rue Jules Lefèbvre, F-75009 Paris (FR)**

---

## Description

L'invention a pour objet un dispositif permettant de transmettre à distance une information de type numérique fournie par un compteur de mesure de débit d'un fluide liquide ou gazeux.

En particulier, l'invention concerne la répétition à distance de l'information portée par un compteur totalisateur principal.

L'invention trouve son application notamment dans le domaine familier des compteurs d'énergie tels que les compteurs à gaz qui, en particulier pour les installations anciennes, sont situés chez l'abonné. Cette situation du compteur chez l'abonné crée une contrainte au niveau du relevé du compteur. L'invention permet de supprimer cette contrainte par le fait qu'on pourra facilement et à peu de frais installer un répétiteur à distance convenable du compteur principal, lequel répétiteur pourra, sans nécessiter une énergie propre d'alimentation, répéter les indications du compteur principal en un lieu approprié au relevé, par exemple dans un tableau extérieur de regroupement de tous les compteurs d'un même immeuble.

Etant donné que la mise en œuvre de l'invention ne nécessite pas l'apport d'une énergie d'alimentation propre au fonctionnement du répétiteur, et permet la transmission de l'information par des câbles souples du genre électrique ou fibre optique, il apparaît que les applications peuvent être très diverses, et sont particulièrement bien adaptées chaque fois que les conditions de travail sont délicates, par exemple s'il s'agit du relevé du débit d'un gaz combustible ou encore s'il s'agit d'un relevé en zone dangereuse (raffineries, mines, . . . ) ou encore en zone contaminée ou difficilement accessible (industrie chimique, nucléaire, etc.).

D'autre part, la transmission à distance se faisant par un câble ou une canalisation souple de type électrique, optique ou hydraulique, on pourra en pratique transmettre et répéter l'information désirée à une distance tout à fait suffisante pour permettre le relevé de ces informations dans les conditions d'accessibilité et de sécurité recherchées.

Selon le document US-A-3 555 902, on connaît déjà un dispositif répétiteur pour compteur d'un débit de fluide du type décrit dans le préambule de la revendication 1, comprenant une chaîne de démultiplication entraînée par de l'énergie prélevée mécaniquement sur le débit de fluide permettant d'armer un mécanisme d'armement/ déclenchement. Ce mécanisme peut comprendre un ressort d'emmagasinage d'énergie, dont l'action après mise sous tension, sera libérée par le mécanisme de déclenchement permettant d'actionner un dispositif d'émission de signal notamment de type électromagnétique. Mais selon ce document, le dispositif d'armement et celui de déclenchement n'agissent pas de façon différée, le déclenchement ayant lieu dès après que l'armement est réalisé.

Dans le document US-A-3 039 111, qui s'applique à un compteur à eau, est décrit un dispositif du même type général que celui du document US-A-3 555 902 et dont les moyens d'armement/ déclenchement viennent actionner une roue à cliquet anti-retour formant étage d'entrée du répétiteur.

Le dispositif conforme à l'invention permettant de transmettre à distance une information de type numérique fournie par un compteur de mesure de débit d'un fluide gazeux, qui pourrait s'appliquer aussi à un liquide, du type général ci-dessus décrit, c'est-à-dire, comportant un dispositif de signalisation comprenant:
- des moyens d'émission d'un signal, ledit signal étant utilisé dans tout dispositif approprié de sortie de signalisation, tel qu'un répétiteur,
- un moyen de commande desdits moyens d'émission du signal dont il déclenche le fonctionnement à un moment déterminé,
- un mécanisme d'armement/déclenchement comprenant:
  - des organes d'armement dudit moyen de commande armés de l'énergie prélevée mécaniquement sur le débit de fluide, et agissant à l'encontre d'un ressort d'emmagasinage d'énergie,
  - des organes de déclenchement libérant l'énergie emmagasinée par le ressort, lequel repousse alors ledit moyen de commande qui vient déclencher lesdits moyens d'émission du signal,
- une came d'armement telle, en particulier, qu'un disque avec un doigt qui sollicite ledit moyen de commande vers sa position armée, se caractérise en ce que le mécanisme d'armement/déclenchement comprenant un dispositif de verrouillage à cliquet bloquant le moyen de commande en position armée, tant qu'une came de déclenchement n'a pas dégagé le cliquet, lesdites cames d'armement et de déclenchement étant toutes deux commandées en synchronisme par le mécanisme démultiplicateur d'entraînement des roues totalisatrices du compteur, la came de déclenchement étant commandée par une des roues totalisatrices du compteur et le disque étant entraîné par une chaîne de démultiplication distincte par le pignon moteur d'entraînement du compteur.

Grâce à ces moyens, il apparaît que selon les applications, on pourra, en fonction du choix de la roue totalisatrice du compteur qui commandera les impulsions, adapter le nombre d'impulsions à l'application particulière en cause, en réduisant ce nombre au strict minimum requis, évitant simultanément des problèmes d'usure, simplifiant la réalisation du répétiteur et augmentant la souplesse d'utilisation du dispositif.

L'invention et sa mise en œuvre apparaîtront plus clairement à l'aide de la description qui va suivre faite en référence aux dessins annexés donnant à titre d'illustration quelques modes de mise en œuvre. Dans ces dessins:

La figure 1 illustre de façon schématique une application de l'invention et comment peut être réalisée l'implantation de l'installation,

la figure 2 montre de façon schématique le dispositif d'armement et de déclenchement conforme à l'invention permettant l'émission d'un signal à partir du dispositif d'affichage du compteur,

la figure 3 montre en vue perspective et éclatée comment s'effectue l'armement du dispositif illustré à la figure 2,

la figure 4 montre de façon plus détaillée un mode de réalisation de l'invention conforme aux dessins des figures 2 et 3 pour application à un compteur totalisateur à affichage de plusieurs chiffres décimaux,

la figure 5 montre de façon schématique en vue perspective un autre dispositif de génération d'un signal électrique utilisable selon l'invention,

la figure 6 montre de façon schématique un mode d'armement du dispositif à ressort en spirale illustré à la figure 5,

la figure 7 montre de façon schématique un autre mode de réalisation pour la génération d'un signal électrique à partir de l'armement d'un dispositif de signalisation conforme à l'invention,

la figure 8 montre de façon schématique un autre dispositif conforme à l'invention dont l'armement permet la génération d'un signal de pression,

la figure 9 montre comme la figure 8 une autre disposition dans laquelle le signal est de type électrique engendré par un quartz piézo-électrique,

la figure 10 est un schéma illustrant le principe de la génération du signal de tension à partir d'un aimant déplacé devant un solénoïde,

la figure 11 montre un schéma électrique pouvant être utilisé pour l'application du signal électrique à un dispositif répétiteur,

les figures 12 et 13 montrent la forme des signaux de tension produits en relation des figures 10 et 11 et selon qu'il y a écrêtage ou non par les diodes de protection Zener du montage illustré,

la figure 14 montre, comme la figure 6, le principe de génération d'un signal de tension créé par une dynamo lancée selon l'une des réalisations illustrées aux figures 5 à 7,

les figures 15 et 16 montrent les signaux de tension obtenus à partir de la dynamo de la figure 14 et reçus dans le schéma de montage de la figure 11 selon qu'il y a ou non écrêtage par les diodes Zener de protection du montage,

la figure 17 illustre une installation de transmission de signal électrique utilisant une fibre optique.

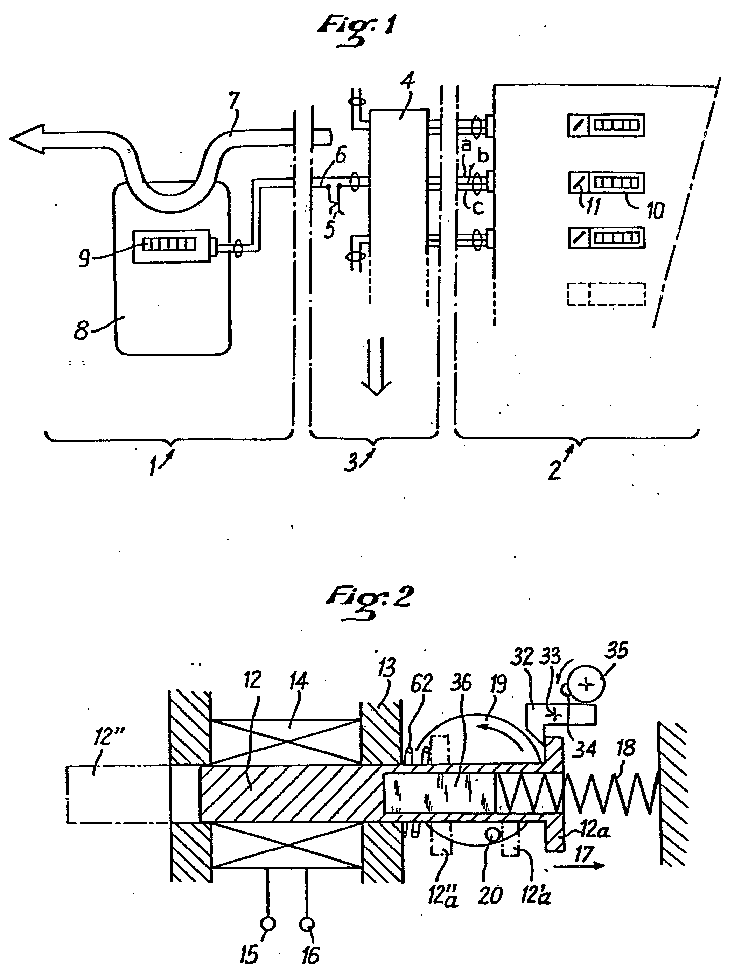

La figure 1, illustre une installation comprenant essentiellement un compteur principal 1 engendrant une information de type numérique, un coffret de regroupement 2 des répétiteurs ou totalisateurs pouvant être placés à distance des divers compteurs 1, et en 3, le dispositif de liaison par fils ou câbles souples reliant les divers compteurs 1 au coffret de regroupement 2. Le dispositif 3 comprendra avantageusement en outre un dispositif 4 de détection de panne ou de fraude qui peut être à poste fixe ou éventuellement mobile en prévoyant une prise, par exemple du type «jack» 5 sur les fils de liaison tels que 6, en supposant dans ce cas, que ces fils sont de types électriques et conduisent des signaux électriques.

En tant que dispositif mobile, on peut utiliser par exemple un appareil portatif de mise au même index du compteur et du répétiteur, appareil de type en soi connu que l'on pourra brancher sur le circuit de liaison 6, à l'endroit de la prise 5. Cet appareil peut similer des «tops» de signalisation à cadence très rapide pour, après une panne ou à la mise en route du dispositif mettre le répétiteur 10 au même index que celui affiché en 9 sur le compteur principal 8.

Le ou les compteurs comptent par exemple le débit d'un fluide schématisé par la flèche 7 traversant le boîtier 8 du compteur, ce débit entraînant les différents tambours décimaux du totalisateur du compteur lesquels ont été suggérés en 9.

Conformément à l'invention, de l'énergie est prélevée sur le système d'entraînement des tambours 9 pour émettre un signal d'information qui sera transmis par la liaison 6 au répétiteur correspondant, tel par exemple que repéré 10, dans le coffret de regroupement 2 par les fils a et b. En cas d'anomalie de fonctionnement détectée par le dispositif 4, ce dernier commande de façon connue en soi un dispositif de signalisation de défaut tel qu'un drapeau 11 apparaissant alors en regard du répétiteur 10. Le signal de basculement du drapeau 11 est véhiculé par le troisième fil c issu du dispositif 4 et le fil commun b.

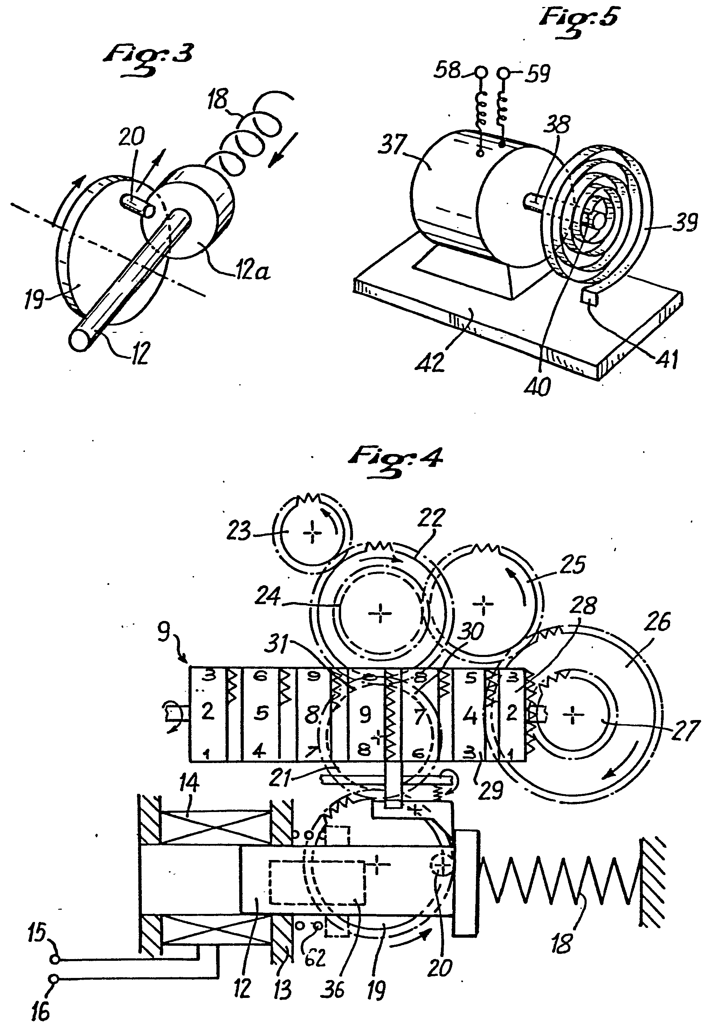

On décrira maintenant en faisant référence plus précisément aux figures 2, 3 et 4 un premier mode de mise en œuvre de l'invention.

Selon ce mode de mise en œuvre, le dispositif de signalisation comprend un piston plongeur 12 guidé mécaniquement dans l'armature 13 d'un solénoïde 14 aux bornes 15 et 16 duquel sera recueilli le signal de tension engendré par le système. Le piston plongeur 12 peut être armé comme il va être décrit en étant repoussé dans le sens de la flèche 17 à l'encontre d'un ressort 18 de type approprié permettant d'emmagasiner l'énergie nécessaire à l'émission d'un signal électrique de qualité suffisante. A la figure 2, le ressort 18 a été représenté schématiquement comme un ressort hélicoïdal de compression; il peut cependant être de tout autre type, par exemple à rondelles élastiques empilables, pneumatique ou autre.

Pour l'armement du ressort et comme il apparaît plus clairement à la figure 3, on utilise un disque 19 portant un doigt d'armement 20 qui vient repousser la tête élargie 12a du piston plongeur 12 à l'encontre du ressort d'armement 18. Le disque 19 et le doigt agissent donc à la manière d'une came permettant l'armement du dispositif, cette came pouvant être de forme adaptée au système particulier de montage sur lequel elle est montée.

Dans la réalisation illustrée à la figure 4, le disque 19 est entraîné par l'intermédiaire de deux pignons de renvoi 21, 22 assurant une démultiplication convenable de l'effort par le pignon moteur 23 d'entraînement du compteur totalisateur 9. A la figure 4, on aperçoit la chaîne des pignons successifs 23, 22, 24, 25, 26, 27 entraînant la roue 28 des unités du compteur, par exemple des litres de gaz ou autres mesurés par le compteur 9. On a repéré en 29, 30, 31... les roues suivantes des unités supérieures respectivement des dizaines, centaines et milliers de litres (m³).

On peut choisir le rapport des dents des différents pignons, par exemple pour que l'armement du ressort et un cycle complet de la came 19, 20 s'effectuent pour le passage d'une unité de volume de fluide telle que la perte de charge par prélèvement d'énergie sur le fluide ne dépasse pas le seuil autorisé par les normes.

En se reportant de nouveau à la figure 2, on a illustré en 12'a une position intermédiaire du piston plongeur 12 qui est progressivement armé à l'encontre du ressort 18. Dans la position en trait plein 12a (pour laquelle on n'a pas représenté le doigt d'armement 20 qui est caché), on voit que le piston est retenu, le ressort ne pouvant se détendre grâce à l'enclenchement d'un cliquet 32 de retenue qui est venu s'engager derrière l'épaulement de la tête 12a du piston 12. Cependant, le cliquet 32 peut basculer autour d'un axe 33 lorsqu'il est repoussé par l'ergot 34 d'une came de déclenchement 35. La rotation de la came 35 et la rotation du disque 19 sont synchronisées, de façon qu'un déclenchement s'effectue par exemple pour chaque passage d'un chiffre du tambour 31 d'affichage des mètres cubes, et pour une position telle que le doigt d'armement 20 du disque 19 ne puisse gêner le recul du piston plongeur 12. Ceci est obtenu facilement puisque ces deux disques 19 et 35 sont entraînés à partir du pignon moteur 23 du compteur totalisateur et sont donc synchrones.

Lorsque le processus de déclenchement intervient, le piston plongeur est ramené brusquement à l'intérieur du solénoïde dans la position illustrée en trait interrompu 12'', 12''a. Le piston plongeur 12 qui comporte un aimant 36 crée ainsi aux bornes 15, 16 du solénoïde un signal de tension, dont la forme a été illustrée à la figure 12, comme il apparaîtra plus loin.

Ce signal est utilisé en étant appliqué par exemple à une ligne électrique souple 6 pour commander l'entraînement correspondant d'un cran du compteur répétiteur 10 associé.

Le signal électrique engendré dans ce cas n'est pas très important, la tension recueillie étant proportionnelle au champ magnétique de l'aimant, au nombre de spires du solénoïde 14 et à la vitesse d'enfoncement du noyau dans le solénoïde. Cette tension est suffisante pour en pratique permettre l'entraînement d'un compteur répétiteur électromécanique à faible énergie de commande. L'avantage du système ainsi conçu est qu'il peut équiper facilement un compteur classique, par exemple de type à gaz domestique, en venant se loger sous le capot de protection du dispositif d'affichage.

Selon les variantes de réalisation illustrées aux figures 5 à 7, le dispositif générateur du signal d'impulsions précédemment décrit, constitué par un aimant plongeur introduit dans l'axe d'un solénoïde, est remplacé par un dispositif du type dynamo permettant d'engendrer un signal de tension de durée plus longue et d'énergie plus importante.

Selon le mode de réalisation schématisé à la figure 5, sur l'axe 38 du rotor d'une dynamo 37 est enroulé un ressort en spirale 39, par exemple du type à lame, dont une extrémité est ancrée en 40 sur l'axe 38 et l'autre extrémité est ancrée en 41 sur un bâti 42, auquel est également fixée la dynamo 37. En 58, 59, on a figuré les sorties de courant de la dynamo.

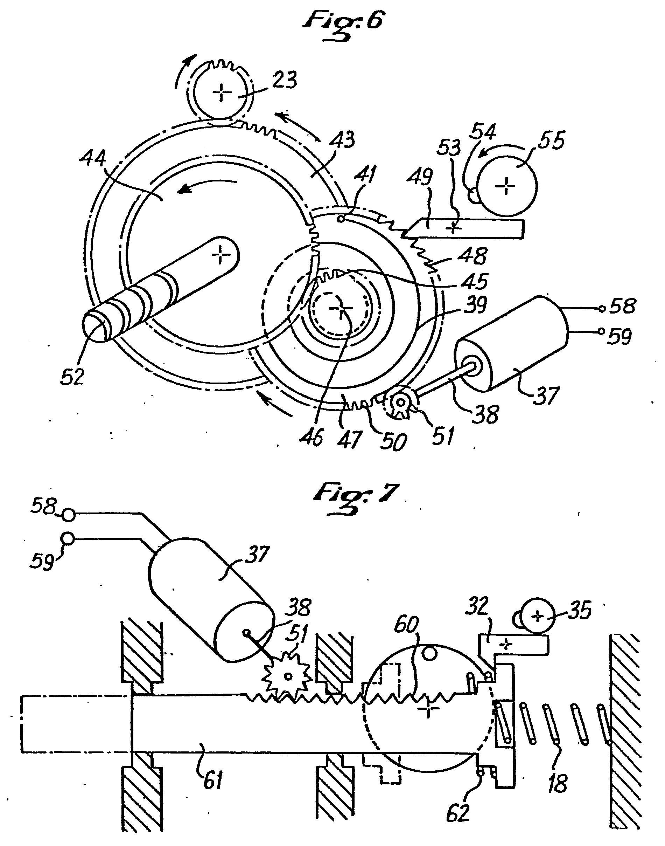

Le dispositif peut être armé, comme schématisé à la figure 6, en utilisant là encore comme énergie motrice celle du pignon 23 d'entraînement du compteur totalisateur à équiper. Le pignon 23 engrène avec un pignon démultiplicateur 43 qui entraîne un pignon intermédiaire 44 calé sur le même axe, lequel engrène avec un pignon 45 solidaire de l'axe 46 d'enroulement du ressort 39. Dans l'exemple illustré, l'extrémité 41 du ressort 39 est ancrée sur la cage 47, libre de rotation sur l'axe 46, et qui tout en protégeant le ressort porte extérieurement des dents en rochets 48 permettant durant ce remontage du ressort un blocage unidirectionnel de la cage. La cage 47 porte également une denture 50 qui engrène avec un pignon 51 lié à l'axe 38 de la dynamo 37. Dans l'exemple illustré, on a supposé que le pignon 44 était pressé par un ressort 52 contre le pignon 43 de façon à assurer une limitation du couple de remontage du système.

Un signal est engendré chaque fois que le cliquet 49 libère la roue à rochets 48 lorsqu'il est basculé autour de l'axe 53 par la came de la roue à came 55 qui sera, comme dans le mode de réalisation précédemment décrit, commandée en synchronisme par la roue du compteur de l'étage désiré, soit la roue des mètres cubes ou des centaines de litres par exemple, s'il s'agit d'un compteur à gaz.

Lorsque le cliquet 49 est soulevé, le rochet 48, en regard de la cage 47, est libéré, et celle-ci est lancée en rotation par le ressort 39 précédemment armé qui se détend en se déroulant. Un mécanisme à roue libre (non représenté) est avantageusement prévu entre l'axe 38 et le pignon 51 pour éviter une contrainte trop importante au mécanisme due à l'inertie du rotor de la dynamo 37 en fin de déroulement du ressort 39.

On peut en outre prévoir un débrayage automatique du système de remontage, par exemple par écartement des disques 43 et 44 lorsque le ressort 39 est remonté sous une tension déterminée. Dans ce cas, le mécanisme de rotation de la roue 44 devra être unidirectionnel pour empêcher le déroulement du ressort tant que le cliquet 49 n'aura pas été soulevé.

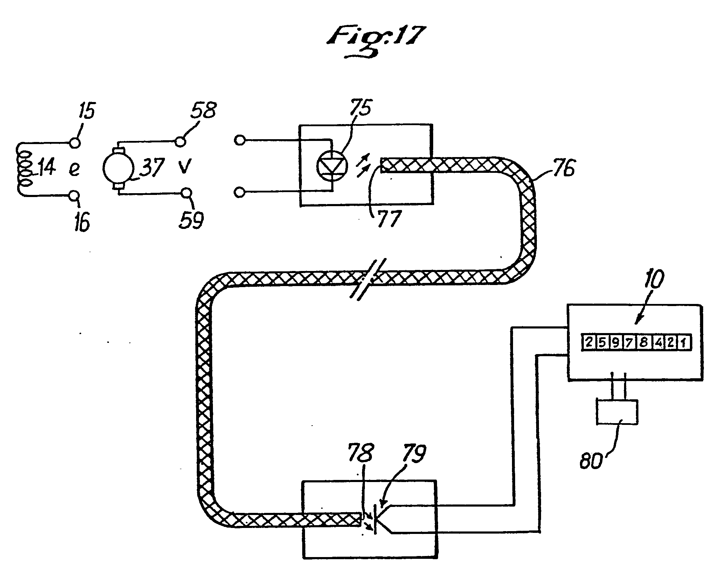

Le signal de tension fourni par une telle dynamo est de puissance plus importante que celui fourni par le solénoïde, et son allure est illustrée à la figure 15, comme il sera décrit ci-après.

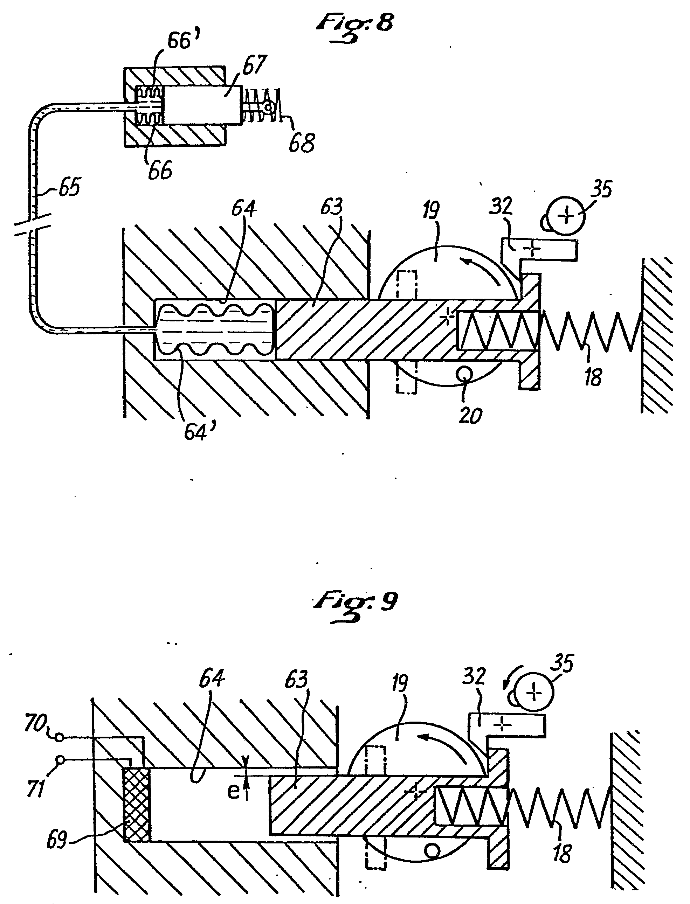

Selon la variante de réalisation illustrée à la figure 7, et dans laquelle les mêmes repères ont été utilisés pour indiquer les éléments semblables à ceux des figures précédentes, on retrouve la dynamo 37 avec sa roue d'entraînement 51. Cependant, l'entraînement de la roue 51 ne se fait plus par système de pignon et ressort en spirale, mais par une crémaillère 60, faisant partie d'un piston plongeur 61, dont le montage s'apparente à celui du piston plongeur 12 des figures 2 et 4. Le piston plongeur est armé de façon identique au piston plongeur 12 et le système ne sera pas en conséquence décrit à nouveau. On retrouve notamment le ressort 18 permettant le stockage de l'énergie, le cliquet 32 de déclenchement du mécanisme et la came 35 de commande du cliquet 32. Pour éviter d'autre part un blocage trop brutal de la dynamo 37 en fin de course de la crémaillère 60, après qu'elle aura été lancée à la suite du déclenchement du système, on prévoira avantageusement un dispositif d'entraînement unidirectionnel, du type à roue libre, par exemple entre pignon 51 et axe 38.

De façon à améliorer la forme du signal électrique produit, on pourra prendre diverses précautions telles que les suivantes.

Dans la réalisation des figures 2 et 4, on prévoira avantageusement un ressort 62 d'amortissement de fin de course du piston plongeur pour éviter le choc du piston sur l'armature 13. Le ressort aura également l'avantage d'amortir le bruit de fonctionnement du système.

Un ressort amortisseur semblable 62 sera également avantageusement prévu dans le cas de la figure 7.

L'énergie électrique fournie par la dynamo permettra de commander le fonctionnement d'un répétiteur qui pourra être de type électromécanique classique, l'énergie de commande étant cette fois suffisante.

Dans les dispositifs précédemment décrits, le signal engendré est de type électrique. L'invention ne se limite cependant pas à la génération de tels signaux.

Ainsi, en se reportant à la figure 8, on retrouve une installation comprenant un piston plongeur 63 guidé dans un cylindre 64 et qui est susceptible d'être armé à l'encontre d'un ressort 18 au moyen d'une roue 19 à doigt d'armement 20, le dispositif pouvant être déclenché par un cliquet 32 commandé par une came de déclenchement 35.

Cependant, le piston 63 n'agit pas à l'intérieur d'un solénoïde, mais à l'intérieur d'un cylindre 64 rempli d'un fluide approprié de transmission de pression enfermé dans une chambre élastique à paroi annelée 64' qui permet de renvoyer à distance cette pression par l'intermédiaire d'une canalisation 65 avantageusement souple mais non dilatable mise en relation avec le volume d'un manchon élastique 66' placé dans un cylindre récepteur 66 dans lequel se déplace le piston 67 constituant l'organe de réception du signal. En 68, on a schématisé un faible ressort de rappel qui peut être utilisé pour faciliter le retour du système dans la position d'armement illustrée en trait plein à la figure.

Il est clair que dans un tel dispositif, on obtiendra sur le piston 67 à chaque processus de déclenchement du ressort 18, une ènergie mécanique

qui permettra d'entraîner cran par cran un compteur répétiteur.

Selon le mode de réalisation illustré à la figure 9, on retrouve les éléments mécaniques de la figure 8, mais le piston 63 se déplace dans un cylindre 64 libre de fluide et avec un certain jeu e ou tout au moins un débit de fuite suffisant pour que le piston 63 après déclenchement par la came 35 du système vienne frapper librement un élément piézo-électrique 69 placé en fond du cylindre 64. Lorsque l'élément piézo-électrique 69 est ainsi frappé par le piston 63, il émet un signal de tension à ses bornes 70, 71, lequel signal peut être utilisé de toute manière appropriée pour exciter un compteur répétiteur placé à distance, ce dernier pouvant être de type électronique.

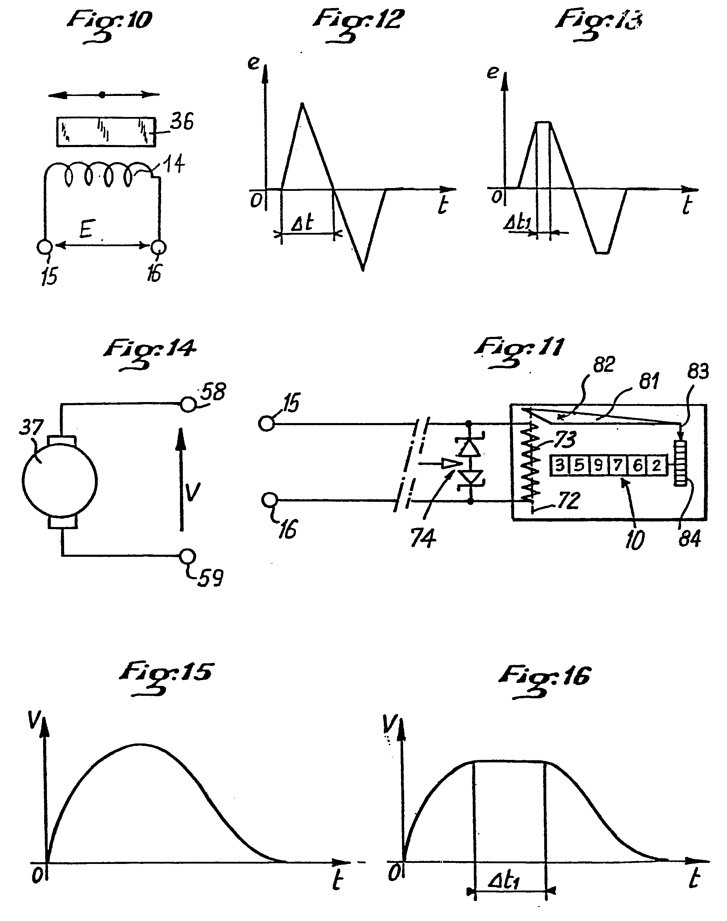

Se reportant au schéma de la figure 10, on a illustré l'aimant 36 se déplaçant par rapport au solénoïde 14 et la tension induite aux bornes 15, 16 du solénoïde. Cette tension peut être utilisée dans un montage du type illustré à la figure 11 pour venir entraîner l'armature 72 d'un solénoïde 73 afin de l'actionner à chaque impulsion de tension. L'armature commande le basculement d'un levier 81 autour d'un axe 82, lequel levier, par un cliquet 83 et une roue à rochets 84 commande le passage d'un cran de la roue unitaire du compteur répétiteur 10 dont la roue 84 est solidaire. De façon à éviter la détérioration du solénoïde 73 en cas de tension trop forte, on peut prévoir, comme illustré le montage en parallèle de diodes Zener 74 qui permettront d'écrêter la tension.

A la figure 12, on aperçoit la forme simplifiée du signal émis sans écrêtage par les diodes Zener, soit qu'on n'utilise pas de telles diodes, soit que le signal n'ait pas une puissance suffisante, et à la figure 13, on aperçoit le même signal après écrêtage, la durée de l'écrêtage étant limité à $\Delta t1$.

A la figure 14, on a schématisé la dynamo 37 et la tension V produite à ses bornes 58, 59.

A la figure 15, on a montré le signal de tension produit et à la figure 16, le même signal dans le cas d'un écrêtage par les diodes Zener pendant le temps $\Delta t1$ dans l'hypothèse d'un montage similaire à celui illustré à la figure 11.

A la figure 17, on a illustré une variante dans laquelle le signal de tension e ou de force électromotrice V produit aux bornes du solénoïde 14 ou de la dynamo 37 était utilisé pour alimenter une diode électroluminescente 75 qui est couplée à une fibre optique 76 à l'une de ses extrémités 77, tandis que l'autre extrémité 78 de la fibre optique est couplée à un photocoupleur 79 qui engendre un signal électrique utilisé pour l'entraînement du compteur répétiteur 10. Dans ce cas, le compteur est avantageusement un compteur électronique à faible consommation avec pile intégrée au lithium à longue durée de vie (schématisée en 80).

Bien entendu, de nombreuses variantes peuvent être apportées aux modes de réalisation illustrés et décrits qui n'ont été donnés qu'à titre d'exemple.

En particulier, la diversié des dispositifs mécaniques permettant l'armement et le déclenchement d'un mécanisme de stockage d'énergie mu directement par le mécanisme d'entraînement des roues totalisatrices du compteur principal est évidemment très grande.

De même, les applications du dispositif peuvent concerner des domaines très divers et trouver application chaque fois qu'on a avantage à répéter à une certaine distance une information donnée en un endroit par un compteur de type à affichage numérique et indépendamment de l'identité du fluide sur lequel est effectuée la mesure.

**Revendications**

1. Dispositif permettant de transmettre à distance une information de type numérique fournie par un compteur (8) de mesure de débit d'un fluide gazeux, qui pourrait s'appliquer aussi à un liquide, du type comportant un dispositif de signalisation comprenant:
- des moyens d'émission (14, 36, 37, 64, 69) d'un signal, ledit signal étant utilisé dans tout dispositif approprié de sortie de signalisation, tel qu'un répétiteur (10),
- un moyen de commande (12, 60, 61, 63) desdits moyens d'émission du signal dont il déclenche le fonctionnement à un moment déterminé,
- un mécanisme d'armement/déclenchement comprenant:
  - des organes d'armement (19, 20, 32) dudit moyen de commande armés par de l'énergie prélevée mécaniquement sur le débit de fluide, et agissant à l'encontre d'un ressort (18) d'emmagasinage d'énergie,
  - des organes de déclenchement (35) libérant l'énergie emmagasinée par le ressort, lequel repousse alors ledit moyen de commande qui vient déclencher lesdits moyens d'émission du signal,
- une came d'armement telle, en particulier, qu'un disque (19) avec un doigt (20) qui sollicite ledit moyen de commande vers sa position armée, caractérisé en ce que le mécanisme d'armement/déclenchement comprend un dispositif de verrouillage à cliquet (32, 49) bloquant le moyen de commande en position armée, tant qu'une came de déclenchement (35, 55) n'a pas dégagé le cliquet (32, 49), lesdites cames d'armement (19, 20) et de déclenchement (35, 55) étant toutes deux commandées en synchronisme par le mécanisme (22, 23, 24) démultiplicateur d'entraînement des roues totalisatrices (29, 30, 31) du compteur, la came de déclenchement étant commandée par une des roues totalisatrices (31) du compteur et le disque (19) étant entraîné par une chaîne de démultiplication distincte (23, 22, 21) par le pignon moteur (23) d'entraînement du compteur.

2. Dispositif selon la revendication 1, caractérisé en ce que lesdits moyens d'émission du signal comprennent un système électromagnétique délivrant un signal de tension ou de courant et comportant un aimant (12, 36) formant piston plongeur se déplaçant à l'intérieur d'un solénoïde (14), ledit ressort (18), lorsqu'il est armé puis déclenché, repoussant ledit piston plongeur dans ledit solénoïde.

3. Dispositif selon la revendication 1, caractérisé en ce que le ressort (18) est armé en compression tendant à repousser un piston à crémaillère (60, 61) sur laquelle engrène un mécanisme d'entraînement (38, 51) en rotation du rotor d'une dynamo (37) pouvant émettre un signal électrique avec interposition d'un dispositif unidirectionnel d'entraînement, par ce mécanisme, du rotor.

4. Dispositif selon la revendication 1, caractérisé en ce que le dispositif de signalisation comporte un piston (63) guidé dans un cylindre (64) en étant rappelé normalement en position d'armement et repoussé par ledit ressort (18) après fonctionnement du mécanisme de déclenchement précité, ledit piston (63) formant marteau destiné à frapper un élément piézo-électrique (69) délivrant un signal de tension.

5. Dispositif selon la revendication 1, caractérisé en ce que ledit moyen de commande comprend:
- un piston (63) qui est guidé dans un cylindre (64) rempli d'un fluide de transmission de pression, formant ainsi moyen d'émission d'un signal, lequel piston (63) est rappelé en position d'armement et repoussé par ledit ressort (18) après fonctionnement du mécanisme de déclenchement précité, et
- un dispositif récepteur (66, 67) lié par une canalisation (65) au volume dudit cylindre (64) et qui reçoit le signal de pression ou de déplacement correspondant au déclenchement du ressort (18).

6. Dispositif selon l'une des revendications 1 à 4, caractérisé en ce que le signal émis est transformé en signal lumineux lequel est transmis par un guide optique (76) au dispositif (10) de sortie de signalisation.

7. Dispositif selon l'une des revendications 1 à 6, caractérisé en ce qu'on prévoit des entrées (5) sur le circuit de transmission des signaux entre le compteur (8) et le répétiteur (10) pour le branchement d'appareils de vérification du circuit et/ou de mise au même index due compteur et du répétiteur.

**Claims**

1. Device for the remote transmission of data of a numerical type provided by a meter (8) for measuring the flow of a gaseous medium and equally well applicable to a liquid, of the type comprising a signalling device comprising:
- means (14, 36, 37, 64, 69) for emitting a signal, the said signal being used in any appropriate signalling output device such as a repeater (10),
- a means (12, 60, 61, 63) of controlling the said means of emitting a signal, the operation of which it triggers at a specific moment,
- an arming/triggering mechanism comprising:
  - elements (19, 20, 32) for arming the said operating means, set by energy drawn mechanically from the flow of fluid and acting against a spring (18) for storing energy,

- triggering means (35) for releasing the energy stored by the spring, which then pushes back the said operating means which triggers the said signal emitting means,
- an arming cam particularly such as a disc (19) having a dog (20) which urges the said operating means to its armed or set position, characterised in that the arming/triggering mechanism comprises a ratchet locking device (32, 49) arresting the operating means in the armed position, until such time as a triggering cam (35, 55) has not released the catch (32, 49), the said arming cam (19, 20) and triggering cam (35, 55) both being synchronously operated by the stepdown mechanism (22, 23, 24) for driving the totalising wheels (29, 30, 31) of the meter, the triggering cam being operated by one of the totalising wheels (31) of the meter and the disc (19) being driven by a different reduction chain (23, 22, 21) by the drive pinion (23) which drives the meter.

2. Device according to Claim 1, characterised in that the said signal emitting means comprise an electromagnetic system delivering a voltage or current signal and comprising a magnet (12, 36) forming a plunger piston adapted for displacement within a solenoid (14), the said spring (18) when it is armed and then triggered, pushing the said plunger piston into the said solenoid.

3. Device according to Claim 1, characterised in that the spring (18) is armed under compression tending to push back a rack type piston (60, 61) with which there is emmeshed a mechanism (38, 51) for causing rotation of the rotor of a dynamo (37) adapted to emit an electrical signal through an interposed device for unidirectionally driving the rotor via this mechanism.

4. Device according to Claim 1, characterised in that the signalling device comprises a piston (63) guided in a cylinder (64) being normally restored to the arming position and repelled by the said spring (18) after the aforesaid triggering mechanism has functioned, the said piston (63) constituting a hammer intended to strike a piezo electrical element (69) which delivers a voltage signal.

5. Device according to Claim 1, characterised in that the said operating means comprise:
- a piston (63) which is guided in a cylinder (64) filled with a pressurised transmission fluid, so forming a means of emitting a signal, the said piston (63) being restored to the arming position and pushed back by the said spring (18) after functioning of the aforesaid triggering mechanism and
- a receiving device (66, 67) connected by a pipe (65) to the space within the said cylinder (64) and which receives the pressure or displacement signal corresponding to triggering of the spring (18).

6. Device according to one of Claims 1 to 4, characterised in that the emitted signal is converted to a light signal which is transmitted by a visual guide (76) to the signal output device (10).

7. Device according to one of Claims 1 to 6, characterised in that inlets (5) are provided on the signal transmission circuit between the meter (8) and the repeater (10) for the connection of instruments for checking the circuit and/or for setting the meter and the repeater at the same index.

**Patentansprüche**

1. Vorrichtung zum Senden auf Entfernung numerischer Daten, welche durch einen Messzähler (8) für den Durchsatz eines gasförmigen Fluids geliefert werden, der auch auf eine Flüssigkeit anwendbar ist, mit einer Signalgebungseinrichtung, welche aufweist:
- Emissionsmittel (14, 36, 37, 64, 69) für ein Signal, welches bei jeder Vorrichtung verwendet wird, die für den Signalgebungsaustritt geeignet ist, wie z.B. ein Wiederholer (10),
- ein Steuermittel (12, 60, 61, 63) der Emissionsmittel für das Signal, dessen Funktion es in einem bestimmten Augenblick freigibt,
- einen Lade-/Auslösemechanismus mit
  - Ladeorganen (19, 20, 32) des Steuermittels, welche durch am Fluiddurchsatz mechanisch abgenommene Energie geladen werden und entgegen einer Energiespeicherfeder (18) wirken,
  - Auslöseorganen (35), die die durch die Feder gespeicherte Energie freigeben, wobei die Feder also das Steuermittel zurückstösst, welches die Signalemissionsmittel auslöst;
- eine Ladenocke, wie insbesondere eine Scheibe (19) mit einem Zeiger (20), der das Steuermittel in seine Ladeposition belastet, dadurch gekennzeichnet, dass der Lade-/Auslösemechanismus eine Verriegelungsvorrichtung aufweist mit einer Sperre (32, 49), welche das Steuermittel in geladener Position blockiert, soweit eine Auslösenocke (35, 55) die Sperre (32, 49) nicht freigesetzt hat, wobei die Lade- (19, 20) und Auslösenocke (35, 55) beide synchron von dem Feineinstellungsmechanismus (22, 23, 24) des Antriebes der Addierräder (29, 30, 31) des Zählers gesteuert werden, die Auslösenocke durch eines der Addierräder (31) des Zählers gesteuert ist und die Scheibe (19) durch eine Kette verschiedener Untersetzung (23, 22, 21) vom Antriebsritzel (23) des Zählerantriebes angetrieben ist.

2. Vorrichtung nach Anspruch 1, dadurch gekennzeichnet, dass die Signalemissionsmittel ein elektromagnetisches System aufweisen, welches ein Spannungs- oder Stromsignal liefert und einen Magneten (12, 36) aufweist, welcher einen Tauchkolben bildet, der sich in das Innere eines Solenoids (14) verschiebt, wobei die Feder (18), wenn sie geladen und dann ausgelöst ist, den Tauchkolben in dieses Solenoid zurückstösst.

3. Vorrichtung nach Anspruch 1, dadurch gekennzeichnet, dass die Feder (18), die unter Druck geladen ist, versucht, einen Kolben mit Zahnstange (60, 61) zurückzustossen, auf welcher ein Antriebsmechanismus (38, 51) unter Drehen des Rotors eines Dynamos (37) eingreift, welcher ein elektrisches Signal emittieren kann mit Einschaltung einer in eine Richtung wirkenden Antriebsvorrichtung des Rotors, durch diesen Mechanismus.

4. Vorrichtung nach Anspruch 1, dadurch gekennzeichnet, dass die Signalgebungsvorrichtung einen Kolben (63) aufweist, der in einem Zylinder (64) geführt ist, wobei er normalerweise in Ladestellung zurückgeholt wird und durch die Feder (18) nach dem Funktionieren des vorgenannten Auslösemechanismus zurückgestossen wird, wobei der Kolben (63) einen Hammer bildet, der dazu bestimmt ist, auf ein piezoelektrisches Element (69) zu schlagen, welches ein Spannungssignal liefert.

5. Vorrichtung nach Anspruch 1, dadurch gekennzeichnet, dass das Steuermittel aufweist:
– einen Kolben (63), der in einem Zylinder (64) geführt ist, welcher mit einem Druckübertragungsfluid gefüllt ist und so das Signalemissionsmittel bildet, wobei der Kolben (63) in Ladestellung zurückgeholt und durch die Feder (18) zurückgestossen wird nach dem Funktionieren des vorgenannten Auslösemechanismus, und
– eine Empfängervorrichtung (66, 67), welche durch eine Leitung (65) mit dem Volumen des Zylinders (64) verbunden ist und das Druck- oder Verschiebesignale aufnimmt, welches dem Auslösen der Feder (18) entspricht.

6. Vorrichtung nach einem der Ansprüche 1 bis 4, dadurch gekennzeichnet, dass das emittierte Signal in ein Lichtsignal umgewandelt wird, welches durch eine optische Führung (76) zu der Signalgeberaustrittsvorrichtung (10) übertragen wird.

7. Vorrichtung nach einem der Ansprüche 1 bis 6, dadurch gekennzeichnet, dass man Eingänge (5) am Übertragungskreis der Signale zwischen dem Zähler (8) und dem Wiederholer (10) vorsieht für den Anschluss der Kontrollapparate des Kreises und/oder dafür, dass der Zähler und der Wiederholer auf die gleiche Stellmarke gebracht werden.

**Fig. 1**

**Fig. 2**

0 142 401

Fig.3

Fig.5

Fig.4

11

# Fig. 6

# Fig. 7

Fig. 8

Fig. 9

Fig. 10

Fig. 12

Fig. 13

Fig. 14

Fig. 11

Fig. 15

Fig. 16

Fig.17